Europäisches Patentamt

European Patent Office

Office européen des brevets

(11) Publication number : **0 520 927 A2**

# EUROPEAN PATENT APPLICATION

(21) Application number : **92480082.4**

(22) Date of filing : **10.06.92**

(51) Int. Cl.⁵ : **G06F 15/24**

(30) Priority : **28.06.91 US 723479**

(43) Date of publication of application :
**30.12.92 Bulletin 92/53**

(84) Designated Contracting States :
**DE FR GB**

(71) Applicant : **International Business Machines Corporation**
**Old Orchard Road**
**Armonk, N.Y. 10504 (US)**

(72) Inventor : **Mukherjee, Sujan Kumar**
**1025 Laurel Mill Drive**
**Roswell, GA 30076 (US)**

(74) Representative : **de Pena, Alain**
**Compagnie IBM France Département de Propriété Intellectuelle**
**F-06610 La Gaude (FR)**

(54) **Method and system for automated generation of product configurations in a computer based manufacturing system.**

(57)    The method and system of the present invention may be employed to capture and utilize customer selected combinations of sales features and feature variants in a computer based manufacturing system. Nonconflicting combinations of sales features and variants are presented to a customer and are utilized to create an End Item Configuration list which lists those components and variations of components which are necessary to manufacture a configuration of a complex product which includes the customer selected features. Production features are indirectly selected by the utilization of key words during customer sales features selection. Upon the promotion of a customer quotation to the status of order, a contract configuration of the product bill of material is automatically created. A combination of a basic bill of material and a selected configuration list may be utilized to permit engineering changes to be supported and tracked by an identified configuration independent of engineering changes for other configurations.

Fig. 1

EP 0 520 927 A2

The present invention relates in general to computer based systems for product configuration management in the manufacture of complex products and in particular to methods and systems for defining a product or configuration of a product described by a set of predefined features. Still more particularly, the present invention relates to a method and system for defining a product or configuration of a product described by a set of predefined features which are selectable by a customer.

Computer based manufacturing systems are well known in the art. Such systems typically provide services such as the tracking of engineering changes which may affect various end item configurations. For example, permanent changes to a basic end item which reduce the cost or improve the basic end item are generally tracked in a time oriented manner. Additionally, changes to routings for basic items may occur as permanent changes which may or may not be caused by changes to the basic end item. Additionally, selected end item configurations may be especially created for specific customer contracts and may include changes which are considered as "transient" changes which are made to a basic End Item Configuration for one contract and may or may not be applicable to other contracts. Finally, routings for contracted end item configurations which are considered "transient" changes to the routings specifically for a particular configuration as modified for a customer contract.

Configuration management within such a computer based manufacturing system is utilized for the manufacture of complex products having multiple diverse configurations. Such configuration management systems often require an automated system of product configuration generation wherein products are described by a set of predefined features which, when selected by a customer, describe a specific product configuration.

The term "End Item Configuration" as utilized herein, describes a specific configuration of a basic product which has been modified to meet specific customer requirements. An end item is defined as a finished product sold as a complete item or repair part. Any item which is subject to a customer order or sales forecast is typically referred to as an end item.

End item features may typically be characterized in one of two manners. "Sales" features are options which are available to a customer when ordering an end item. Sales features typically provide a secondary, rather than a basic characteristic or improvement to an end item. Sales features generally reflect the operation, usability or functionality of an end item. These features provide a method of customizing an end item to a particular customer's requirements. Direct selection of a sales feature or feature variant may indirectly influence the inclusion of other sales features or feature variants. Additionally, "production" features may be assigned to an end item. Production features are options to configure an item, which is not necessarily an end item, and its associated routing and process plans according to technical specifications. Production features are generally identified separately from sales features. Selection of a sales feature or its variant may influence the selection of one or more production features and their variants.

There are four general types of sales features. A mandatory sales feature is a feature which must be included in order to render a basic end item functional in nature. A mandatory feature may require a selection among variants of the feature. A choice of one of the variants must be made to complete the customer order. In such cases, a default variant may be defined. The selection of a variant may be direct, based upon a selected feature, or indirect, based upon selection rules.

Optional sales features are features which are not required to configure a functional end item. The functions of an end item may be improved or changed by the selection of one or more optional features. Optional features may also have variants. An accessory is a sales feature which is included with the end item when shipped to the customer. Accessories are not required to configure a functional end item. Finally, a "engineer-to-order" item is a sales feature which did not previously exist, but which may now be added to an end item in response to a specific customer contract. If desired, an engineer-to-order item may be converted in the future to a standard option that can be offered to other customers.

The functional requirements and features set forth above are well known in the art of computer based manufacturing systems; however, full implementation of the functions is not possible due to the required infrastructure necessary to provide full support for "contract and/or configuration effectivity" of engineering changes. Traditionally, most commercially available software systems for bill of material systems or other computer based engineering systems provide support for either or both sales and production feature selection in conjunction with "date" effectivity for engineering changes that provide inadequate infrastructure for proper implementation of the required functions.

For example, none of the commercially available software systems can distinguish between "permanent" changes made to a basic end item and "transient" changes made to the basic end item to satisfy specific customer configuration requirements. There are other limitations to the sales feature selection functions, since only one level of feature variants selection list is presented to the user for selection. More emphasis is placed on validating the combination of feature selections rather than providing stepwise guidance to the user for selecting the proper combination of sales features in the first place. Examples of such partial implementation of configuration management may be seen in the COPICS (Communications Oriented Production Information and Control System) family of products and the MAPICS (Manufacturing Accounting and Production Information Control System) family of products both manufactured by International Business Machines Corporation of Armonk, New York.

Thus, it should be apparent that need exists for a method and system which permits the customer to select non-conflicting sales features and variants and which can then utilize these selected sales features and variants to create an End Item Configuration list comprising a listing of components and variations of components which are necessary to manufacture a selected configuration of a complex product.

It is therefore one object of the present invention to provide an improved computer based system for product configuration management in the manufacture of complex products.

It is yet another object of the present invention to provide an improved method and system for defining a product or configuration for complex end items which are described by a set of predefined features.

It is yet another object of the present invention to provide an improved method and system for defining a product or configuration described by a set of predefined features which are selected by a customer.

The foregoing objects are achieved as is now described. The method and system of the present invention may be employed to capture and utilize customer selected combinations of sales features and feature variants in a computer based manufacturing system. Nonconflicting combinations of sales features and variants are presented to a customer for selection and are utilized to create an End Item Configuration list which lists those components and variations of components which are necessary to manufacture a configuration of a complex product which includes the customer selected features. Production features are indirectly selected by the utilization of key words during customer sales features selection. Upon the promotion of a customer quotation to the status of order, a contract configuration of the product bill of material is automatically created. A combination of a basic bill of material and a selected configuration list may be utilized to permit engineering changes to be supported and tracked for an identified configuration independent of engineering changes for other configurations.

The novel features believed characteristic of the invention are set forth in the appended claims. The invention itself however, as well as a preferred mode of use, further objects and advantages thereof, will best be understood by reference to the following detailed description of an illustrative embodiment when read in conjunction with the accompanying drawings, wherein:

Figure 1 is a block diagram depicting the business processes and data flow for creating an End Item Configuration utilizing sales features and variants in accordance with the method and system of the present invention;

Figure 2 is a diagram depicting the data relationships between system data objects in accordance with the method and system of the present invention;

Figure 3 is a schematic diagram of a bill of material showing a traditional implementation of production features;

Figure 4 is a graphic depiction of a generic bill of material stored within a relational database table in accordance with the method and system of the present invention;

Figure 5 is an illustration of the creation of a decision tree for stepwise selection of sales features and variants in accordance with the method and system of the present invention;

Figure 6 is a graphic depiction of a decision tree for implementing selection rules for sales features and variants in accordance with the method and system of the present invention;

Figure 7 is an illustration of captured customer selected sales features and variants in accordance with the method and system of the present invention;

Figure 8 illustrates the establishment of direct relationships between sales features and items in a bill of material in accordance with the method and system of the present invention;

Figure 9 illustrates an alternative method of establishing relationships between sales features and production features in accordance with the method and system of the present invention;

Figure 10 illustrates a method for generating required production features in accordance with the method and system of the present invention; and

Figure 11 illustrates a method of generating required standard options in accordance with the method and system of the present invention.

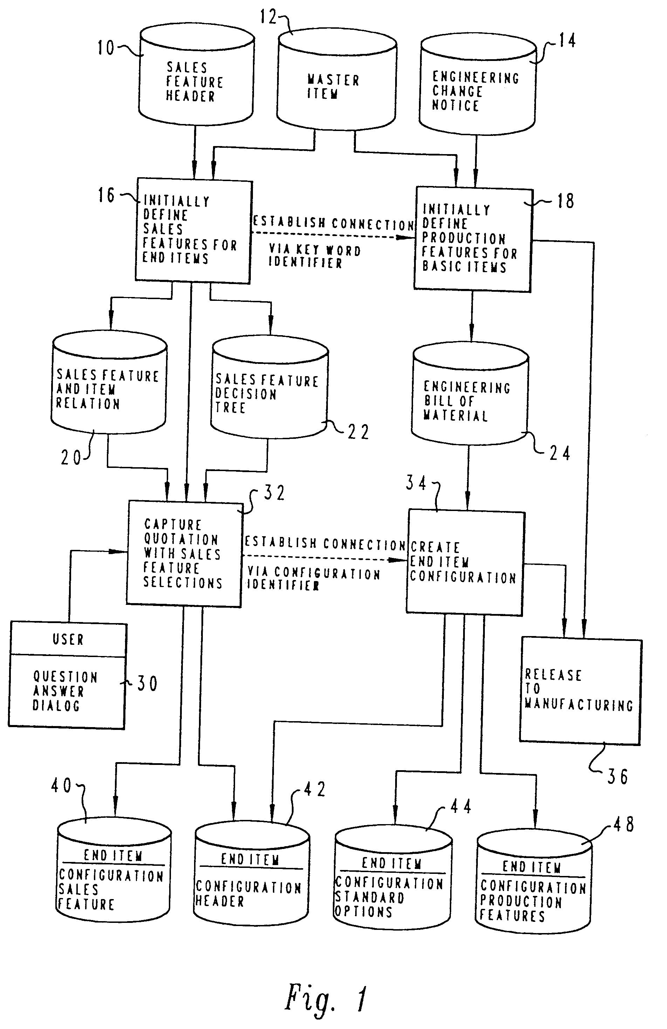

With reference now to the figures and in particular with reference to Figure 1, there is depicted a block diagram illustrating the business processes and data flow for creating an end item configuration utilizing sales features and variants in accordance with the method and system of the present invention.. Those skilled in the art will appreciate that the method and system of the present invention may be implemented utilizing any suitable computer system such as the IBM System/370 computer manufactured by International Business Machines Corporation of Armonk, New York.

As illustrated in Figure 1 an Engineering Change Notice 14 has been created for the initial release of a basic end item which may be configured at a later time to meet specific customer requirements. Reference numeral 18 depicts the initial definition of production features for a basic item and defines the master item data base 12 and engineering bill of material database 24. Master item database 12 and engineering bill of material 24 together define those product structures as found in conventional systems utilizing relational databases. This definition preferably includes the use of key words within bills of material to indicate the presence of "production" features and variants which are distinct from "sales" features and variants. Other data elements, such as insert/extract sequence numbers are typically utilized for engineering change version control of bills of material in a manner well known in the art.

Not all application objects which are utilized for engineering change version control and contract and/or serial effectivity implementation are depicted within Figure 1; however, those skilled in the art will appreciate that such objects may be utilized in the present method and system without departing from the spirit and intent of the present invention. It will be assumed for purposes of this explanation that these objects or equivalent underlying functions and facilities are available before automating the process of configuration generation utilizing sales features and variants as described herein.

Referring again to reference numeral 18 the definition of the master item and bill of material for a "generic" end item, which includes all possible standard options which may be derived from selected sales features and variants, is created. By definition, a generic end item may not be a functional end item but it is utilized to create "specific" functional end item configurations which are based on direct selection of "standard" options which may further lead to indirect selection of production features. Those skilled in the art will appreciate that in place of generic end items it is possible to utilize modular bills of material which may be combined together to create a functional end item. However, for generic end items, an item feature code attribute of the bill of material component is utilized to distinguish between optional components and basic components. This attribute is distinct from the key word attributes of basic components which are utilized to identify production features and their variants. Use of production feature identifiers and variants identifiers in bill of material components have been traditionally utilized to define "generic" assemblies from which "specific" assemblies may be derived.

As an example of such production feature variants, a lawn mower body assembly may be manufactured having two alternative body frames as production features from which one body frame must be selected. One bill of material component, a body frame, has the "20_INCH" variants of the "CUT" feature and another component, a different body frame, may have the "22_INCH" variants of the "CUT" feature.

One of these two variants may be indirectly chosen as a result of one of the sales feature selections. The sales feature variants are also defined by key words which need not be the same as those utilized for production feature variants. However, those skilled in the art will appreciate that sales features are not recorded within the bill of material. This restriction prevents undue complexity of the bill of material and insulates the bill of material from changes to sales features and their variants.

Still referring to Figure 1, sales feature header 10 is utilized to uniquely identify and describe each sales feature variant. Process step 16 establishes the relationship between key word identifiers of sales feature variants and items within the engineering bill of material 24, which are associated with the sales feature variants, as depicted at reference numeral 20. Step 16 also establishes the relationship between the key word identifiers of sales feature variants set forth within sales feature header 10 and the key word identifiers of production feature variants recorded in the engineering bill of material 24, within the sales feature decision tree database 22. These two types of relationships establish indirect connections between sales features and bills of material without requiring modification to the bills of material.

Sales features and variants may have dependencies on other sales features and variants. For example, for the lawn mower example cited above, a 3.5 horsepower engine option may be chosen for either manual drive with a 22-inch cut width or self-propelled drive with 20-inch cut width. For complex products with many sales features and variants these dependency relationships may be quite complex. These relationships between sales feature variants and the rules for feature variant selection are preferably stored outside of the bill of material. For very complex products it may be necessary to utilize expert systems or other artificial intelligence implementations. For moderately complex products it may be adequate to implement simpler techniques, such as decision trees or other types of decision tables.

Regardless of how feature selection process is implemented, the end result will be the capture of customer selected sales feature variants and the combination of the associated items to generate a unique configuration of a functional end item for the customer. As set forth within Figure 1 at step 32, the customer selected feature variants may be captured by recording those selections in the end item configuration sales feature object 40, with a unique configuration identifier utilized to identify the specific end item configuration within end item configuration header 42.

The capturing of customer selected feature variants is preferably utilized at the sales quotation stage to continue negotiations and make changes to feature selections until a firm order has been received. The negotiation process may identify new features for which some new items need to be specially engineered to meet customer requirements. There is, in accordance with the method and system of the present invention, no need to create a complete end item configuration until such time as a customer enters an order.

After customer selected sales features are stored within end item configuration sales feature object 40, the list price and shipping weight for each selected sales feature variants may be added to or subtracted from a base price and a base shipping weight respectively, and the resultant figures may be obtained on demand by a user of the method and system of the present invention.

Since the selected sales variants contain connections to associated items as set forth within database 20 and established within step 16, the complete end item configuration may be generated at any time after an order has been received. It is assumed that the relationship between the end item configuration identifier stored within object 42 and the customer contract (not shown) has already been established by the underlying system of contract/configuration effectivity, in the manner set forth within the cross referenced application, and therefore the effectivity of the end item of configuration identifier set forth in object 42 is known.

The above described technique of capturing customer selected sales feature variants in the end item configuration sales feature object 40 is independent of any specific technique for feature selection. For example, a "rules based" expert system may be utilized for very complex products and a simpler decision logic may be utilized for simple to moderately complex end items to capture the final selections without impacting any other part of the overall system.

It will thus be possible to easily replace a simpler decision logic by a more advanced decision logic as the need arises.

For simple to moderately complex products, the dependencies between sales feature variants is preferably defined in a tree structure that is somewhat similar to a multi-level bill of material. The tree structure is implemented by establishing a parent/child relationship between sales feature variants in the sales feature decision tree object 22. At the root of the decision tree is the end item identifier itself and at the branches and leaves are the sales features which may be connected to items within bill of material 24 via sales feature and item relation 20. The sales features are connected, as required, to the production feature variants for further selection of components from the bill of material.

This indirect connection is also recorded in the sales feature and item relation object 20. At any intermediate level of the tree structure, users may define any arbitrary feature variants which are distinct from feature variants that are used for dialog with customers. The arbitrary feature variants allow flexibility in constructing the decision tree structure. A tree structured feature variants relationship is highly suitable for a series of question and answer type of dialogs, as set forth at reference numeral 30 within Figure 1. A user of the system may utilize such a series of question and answer type of dialogues to guide a customer through various selectable features. Each feature identifier is like a question to ask and the variants of the feature are multiple choice answers which a customer may select.

After sales feature selection is finalized and customer order is confirmed, the details of the ordered end item configuration are created as set forth at reference numeral 34. If desired, this step may be performed prior to receiving order confirmation. Thereafter, any differences between the quoted configuration and the ordered configuration will require amendments to the quoted configuration. The captured end item configuration sales feature 40 is expanded through the use of sales feature and item relation 20 to generate the required standard options and store them in the end item configuration standard options object 44. Similarly, the captured end item configuration sales feature 40 may be expanded through the use of sales feature and item relation 20 to generate the required production features and store them in the end item configuration production features object 48.

Those skilled in the art will appreciate that the business process requirements may or may not place the contracted configuration under engineering change control. The existence of a system infrastructure which supports contract end item configuration effectivity of engineering changes is disclosed within the above-referenced application and is assumed for this implementation of automated generation of end item configurations using sales features and variants.

Those skilled in the art will also appreciate that it is unnecessary to create detailed records of standard options and production features for a customer contract which is still in quotation status. When a customer contract for a new end item configuration is promoted from the quotation status to order status these detailed configuration data may be generates automatically utilizing the method and system of the present invention.

After generating the production features and standard options data for customer contracted end item configurations, these configurations are released to manufacturing. The "release" of an end item configuration is not necessarily the same as an engineering change release for individual items. A customer contracted end item configuration may or may not be under engineering changes control as set forth above. The end item configurations are defined outside the bills of material which are under engineering change control. When an end item configuration is released to manufacturing and is not under engineering change control, the manufacturing engineering function may construct the configuration and release it directly to the shop floor. The predefined sales feature selection rules built into the decision tree structure ensure conformance to design engineering practices without further involvement of the design engineering function.

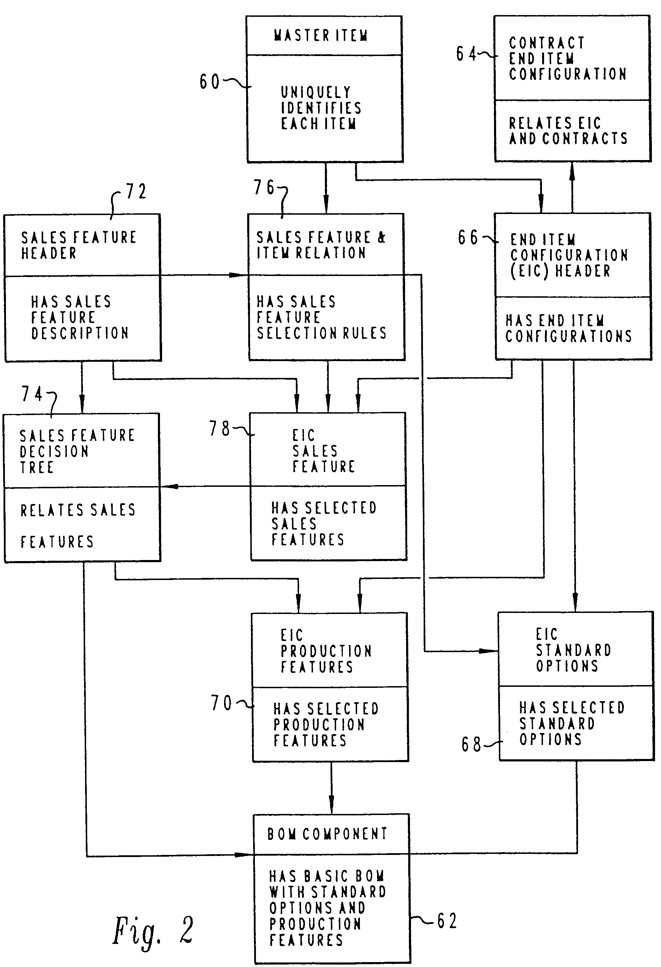

Referring now to Figure 2 there is depicted a diagram illustrating the data relationship between system data objects in accordance with the method and system of the present invention. This diagram indicates data relationships between various data objects and depicts objects which are generally available in existing bill of material system which may be utilized without modification, objects which are available within existing bill of material systems which are enhanced by the utilization of additional attributes and new objects which are defined for implementing the method and system of the present invention to provide connection between customer selected sales feature variants and the contract/configuration effectivity implementation.

These existing, enhanced and/or new objects depicted within Figure 2 are set forth in detail within the tables below. Each table sets forth whether the object is an existing object, an enhanced object or a new data object and lists the various attributes associated with the particular object and the usage of that attribute for configuration effectivity utilizing sales features in accordance with the method and system of the present invention. Each table number corresponds to the number of the object depicted within Figure 2, for ease of explanation.

### TABLE 60 MASTER ITEMS (Existing Object)

| Attribute | Attribute Usage for Configuration Effectivity Using Sales Features |
|---|---|
| Item Identifier | It uniquely identifies each end item and other items which are associated to sales features and their variants. |
| Other attributes | Other attributes of this object are not directly used for sales feature related functions. |

### TABLE 62 BILL OF MATERIAL COMPONENT (Existing Object)

| Attribute | Attribute Usage for Configuration Effectivity Using Sales Features |
|---|---|
| Item Feature Code | It identifies BOM components that are optionally used in the higher level assembly. These components are *assemble-to-order* components that represent standard options (sales feature variants). |
| Other attributes | Other attributes of this object are not directly used for sales feature related functions. Use of the logical key for this object is implied. |

TABLE 64   CONTRACT END ITEM (CEI) CONFIGURATION (Existing Object)

This object represents the relationship between the customer contract object and the end item configuration header object. The intersection data contains a subset of the attributes normally found in the customer order line items used by customer order servicing applications. This object therefore represents the relationship between the customer order line items and the end item configuration header.

This object is not under engineering change control. The attributes in this object are those required by the design engineering and manufacturing engineering functions.

TABLE 64 continued

| Attribute | Attribute Usage for Configuration Effectivity Using Sales Features |
|---|---|
| Contract Identifier | It identifies a customer contract or an internal order. A customer quotation or order identifier is used when a formal customer contract is not available. It is a required attribute. <br><br> It is a part of the unique logical key. |
| Contract Line Number | It identifies the line number in a a customer contract or an internal order. It is a required attribute. <br><br> It is a part of the unique logical key. |
| Contract End Item (CEI) Identifier | It identifies a contract end item (CEI) on one line of a customer contract. It is usually a product model or a fully interchangeable assembly for which a specific customer configuration is defined. The item must exist in the Master Item object. It is a required attribute. |
| CEI Effectivity Type Code | It indicates the "active" effectivity type for the CEI configuration. See end item configuration header object for an explanation of the active effectivity type code. <br><br> Suggested values for CEI configuration effectivity are: <br><br> • SC - CEI serial number <br> • BC - CEI batch number <br> • LC - CEI lot number |
| CEI Order Quantity | It indicates the order quantity for a customer end item that appears on one line of the customer contract. |
| CEI Order Quantity Unit of Measure | It is the unit of measure for the CEI quantity. |
| CEI Delivery Date | It indicates the customer requested delivery date for an end item that appears on one line of the customer contract. |
| End Item Configuration Identifier | It uniquely identifies a specific configuration of the end item. It is system generated and not externalized. An existing end item configuration identifier can be reused by copying it from another instance of this CEI configuration object. |

TABLE 66    END ITEM CONFIGURATION (EIC) HEADER (Existing Object)

This existing object is utilized for implementing configuration effectivity using sales features and sales feature variants.  Its associated detail objects are also utilized to completely define all end item configurations and their effectivity.

This object is under Engineering Change/Manufacturing Engineering Change version control, but may contain non-Engineering Change controlled end item configurations.

TABLE 66 continued

| Attribute | Attribute Usage for Configuration Effectivity |
|---|---|
| End Item Identifier | It identifies an end item. An end item is defined as a finished product sold as a complete item or a repair part. Any item that is subject to a customer order or sales forecast is an end item. Also, the highest level of assembly shown by the bill of material. For CEI configuration effectivity purposes, it is usually a product model or a fully interchangeable assembly for which a specific customer configuration is defined. The end item must exist in the Master Item object.<br><br>This is a part of the unique logical key. |
| End Item Configuration Identifier | It uniquely identifies a specific configuration of the end item as found in the CEI configuration object. It is not externalized.<br><br>This configuration identifier must match a CEI configuration identifier in the CEI configuration object.<br><br>This is a part of the unique logical key. |
| EIC View Identifier | It uniquely identifies a specific view of a CEI configuration. The configuration may be differently restructured in each view. Suggested values:<br><br>• E - engineering view<br>• M1 - manufacturing view 1<br>• Mn - manufacturing view n<br>• C1 - costing view 1<br>• Cn - costing view n<br>• R1 - rework view 1<br>• Rn - rework view n<br>• S1 - sand box view 1<br>• Sn - sand box view n<br><br>This is a part of the unique logical key. |
| Location Identifier | It identifies the location at which this EIC header object is used. It further qualifies the EIC views that may be uniquely restructured at each location.<br><br>An implementation option is to use a unique EIC view identifier (for example, using subscripts 1 through n) for any location that needs to uniquely restructure the end item configuration. This will avoid the need to use a combination of EIC view identifier and location identifier data elements to uniquely identify each view. This will allow any of the views to be shared by more than one locations that are supported by a single processor.<br><br>This is a part of the unique logical key. |

## TABLE 66 continued

| Attribute | Attribute Usage for Configuration Effectivity |
|---|---|
| Insert Sequence Number | It identifies the inserting EC or MEC that created this instance of the EIC header object. It is the same as design/manufacturing sequence number in the EC/location affected item object for the end item. For an end item configuration that is not under EC control, this attribute is set to a value of "non-EC controlled". <br><br> This is a part of the unique logical key. |
| Extract Sequence Number | It identifies the extracting EC or MEC that created this instance of the EIC header object. It is the same as design/manufacturing sequence number in the EC/location affected item object for the end item. For an end item configuration that is not under EC control, this attribute is set to a value of "non-EC controlled". |
| EIC Type Code | It indicates the type of end item configuration. An end item configuration may include different types of item configurations. <br><br> Suggested values: <br><br> • ATO - assemble-to-order: uses standard options (sales features) only <br> • MTO - make-to-order: uses predesigned item(s) and may use standard options (sales features) <br> • ETO - engineer-to-order: has new item(s) to be designed and may use predesigned items and/or standard options (sales features) |
| EIC EC Control Status | It indicates whether the end item configuration is under EC control. <br><br> Suggested values: <br><br> • 0 - EC controlled <br> • 1 - Not under EC control <br><br> The following types of end item configurations are not under EC control: <br><br> • An EIC of type ATO (assemble-to-order) <br> • A new EIC of type ETO (engineer-to-order) for which the CEI configuration is in quotation or order status <br><br> As needed, a new end item configuration can be promoted from not under EC control" status to "EC controlled" status. |
| Planned Effectivity Type Code | It indicates the type of *planned* effectivity for the end item configuration. It is active for EC controlled configurations in prerelease and release status. It is inactive for: <br><br> • end item configurations that are not under EC control <br> • EC controlled configurations in accept, effective and closed status <br><br> Suggested values for CEI configuration effectivity are: <br><br> • SC - CEI serial number <br> • BC - CEI batch number <br> • LC - CEI lot number |

TABLE 66 continued

| Attribute | Attribute Usage for Configuration Effectivity Using Sales Features |
|---|---|
| Actual Effectivity Type Code | It indicates the type of *actual* effectivity for the end item configuration. It is inactive for EC controlled configurations in prerelease and release status. It is active for: <br><br> • end item configurations that are not under EC control <br> • EC controlled configurations in accept, effective and closed status <br><br> Suggested values for CEI configuration effectivity are: <br><br> • SC - CEI serial number <br> • BC - CEI batch number <br> • LC - CEI lot number |

## TABLE 68 END ITEM CONFIGURATION (EIC) STANDARD OPTIONS (New Object)

This object is used to include items representing customer selected sales features and variants within the end item configuration for the customer contract. Inclusion of standard options may cause removal of certain basic components from the same or different assemblies.

This object is under Engineering Change/Manufacturing Engineering Change version control, but it may also contain non-Engineering Change controlled end item configurations which utilize standard options.

| Attribute | Attribute Usage for Configuration Effectivity Using Sales Features |
|---|---|
| End Item Identifier | It identifies an end item as found in the EIC header object. <br><br> This is a part of the unique logical key which must match with a logical key of the EIC header object. |
| End Item Configuration Identifier | It uniquely identifies a specific configuration of the end item as found in the EIC header object. It is not externalized. <br><br> This is a part of the unique logical key which must match with a logical key of the EIC header object. |
| EIC View Identifier | It uniquely identifies a specific view of an end item configuration as found in the EIC header object. <br><br> This is a part of the unique logical key which must match with a logical key of the EIC header object. |

TABLE 68 continued

| Attribute | Attribute Usage for Configuration Effectivity Using Sales Features |
|---|---|
| Location Identifier | It identifies the location at which this EIC standard options object is used as per the EIC header object.<br><br>This is a part of the unique logical key which must match with a logical key of the EIC header object. |
| Insert Sequence Number | It identifies the inserting EC or MEC that created this instance of the EIC standard options object. It is the same as design/manufacturing sequence number in the EC/location affected item object for the end item. For an end item configuration that is not under EC control, this attribute is set to a value of "non-EC controlled". |
| Extract Sequence Number | It identifies the extracting EC or MEC that created this instance of the EIC standard options object. It is the same as design/manufacturing sequence number in the EC/location affected item object for the end item. For an end item configuration that is not under EC control, this attribute is set to a value of "non-EC controlled". |
| Item Identifier | It identifies the following types of items that are included in the end item configuration:<br><br>• an item that has standard options (sales feature variants)<br>• an item is impacted by a customer selected standard option<br><br>This item must exist as an EC/location affected item with matching location identifier and EC-MEC identifier.<br><br>This is a part of the unique logical key. |
| Item EC-MEC Identifier | It identifies the EC or MEC for the item specified in this configuration. The default is to use the latest EC/MEC at the time this object instance is created. |
| Component Item Identifier | It identifies the following types of components in the BOM component object for which quantities are being specified or adjusted as per the component adjustment quantity action code:<br><br>• a customer selected standard option<br>• a basic component that is impacted by a customer selected standard option<br><br>This data element is used when user defined sales features and variants are used. Selection of a sales feature variant (user defined) will add components that are standard options and may cause removal of certain basic components from the same or different assemblies.<br><br>This is a part of the unique logical key. |
| Component Sequence Number | It uniquely identifies each occurrence of a specific BOM component within an assembly as found in the BOM component object.<br><br>This data element is used when user defined sales features and variants are used.<br><br>This is a part of the unique logical key. |

TABLE 68 continued

| Attribute | Attribute Usage for Configuration Effectivity Using Sales Features |
|---|---|
| Component Adjustment Quantity | It indicates the component quantity that is to be used for adjusting the existing component quantity in the BOM component object.<br><br>This data element is used when user defined sales features and variants are used. |
| Component Adjustment Quantity Unit of Measure | It is the unit of measure for component adjustment quantity.<br><br>This data element is used when user defined sales features and variants are used. |
| Component Quantity Action Code | It indicates the action to be performed on the existing component quantity in the BOM component object using the component adjustment quantity.<br><br>Suggested values:<br><br>• A - add the adjustment quantity to the BOM component quantity<br>• R - remove (subtract) the adjustment quantity from the BOM component quantity<br>• S - substitute (replace) the BOM component quantity by the adjustment quantity<br><br>This data element is used when user defined sales features and variants are used. |

TABLE 70    END ITEM CONFIGURATION (EIC) PRODUCTION FEATURES (New Object)

This object is utilized to allow indirect selection of component items within the end item configuration for the customer contract resulting from customer selected sales features and variants.

This object is under Engineering Change/Manufacturing Engineering Change version control, but it may contain non-Engineering Change, controlled end items configurations.

| Attribute | Attribute Usage for Configuration Effectivity Using Sales Features |
|---|---|
| End Item Identifier | It identifies an end item as found in the EIC header object.<br><br>This is a part of the unique logical key which must match with a logical key of the EIC header object. |

TABLE 70 Continued

| Attribute | Attribute Usage for Configuration Effectivity Using Sales Features |
|---|---|
| End Item Configuration Identifier | It uniquely identifies a specific configuration of the end item as found in the EIC header object. It is not externalized.<br><br>This is a part of the unique logical key which must match with a logical key of the EIC header object. |
| EIC View Identifier | It uniquely identifies a specific view of an end item configuration. as found in the EIC header object.<br><br>This is a part of the unique logical key which must match with a logical key of the EIC header object. |
| Location Identifier | It identifies the location at which this EIC production features object is used as per the EIC header object.<br><br>This is a part of the unique logical key which must match with a logical key of the EIC header object. |
| Insert Sequence Number | It identifies the inserting EC or MEC that created this instance of the EIC production features object. It is the same as design/manufacturing sequence number in the EC/location affected item object for the end item. For an end item configuration that is not under EC control, this attribute is set to a value of "non-EC controlled". |
| Extract Sequence Number | It identifies the extracting EC or MEC that created this instance of the EIC production features object. It is the same as design/manufacturing sequence number in the EC/location affected item object for the end item. For an end item configuration that is not under EC control, this attribute is set to a value of "non-EC controlled". |
| Item Identifier | It identifies one of the following types of items that is included in the end item configuration:<br><br>• an item that has a custom (engineer-to-order) variations<br>• an item that has standard options (or sales feature variants)<br><br>This item must exist as an EC or MEC affected item with matching item custom variation identifier, location identifier, EC-MEC identifier.<br><br>This is a part of the unique logical key. |
| Item EC-MEC Identifier | It identifies the EC or MEC for the item custom variation identifier used in this configuration. The default is to use the latest EC/MEC at the time this object instance is created. |
| Production Feature Sequence Number | It uniquely identifies each occurrence of a unique combination of production feature and production variant selected for the item. Note that only sales feature variants are selected by customers and production feature variants are either indirectly selected or manually selected by the design engineer.<br><br>This is a part of the unique logical key. |

TABLE 70 Continued

| Attribute | Attribute Usage for Configuration Effectivity Using Sales Features |
|---|---|
| Production Feature Identifier | It is identical to the Feature Identifier in BOM component. It is used in conjunction with Production Variant Identifier for selecting the appropriate components for the item configuration. Note that it is possible to specify more than one pair of production features and variants for a single assembly to select many components. It is also possible to specify more than one pair of production features and variants for a single assembly (or end item) that spans multiple levels of BOM components. |
| Production Variant Identifier | It is identical to the Variant Identifier in BOM component. It is used in conjunction with Production Feature Identifier for selecting the appropriate components for the item configuration. Note that it is possible to specify more than one pair of production features and variants for a single assembly to select many components. |

## TABLE 72 SAMPLE SALES FEATURE HEADER (New Object)

This newly defined object is utilized to uniquely identify and describe each sales feature and its variants. This object is not under Engineering Change control.

| Attribute | Attribute Usage for Configuration Effectivity Using Sales Features |
|---|---|
| Sales Feature Identifier | It is a key word which uniquely identifies a sales feature. The sales feature may or may not have variants.<br><br>This is a part of the unique logical key. |
| Sales Feature Variant Identifier | It is a key word which uniquely identifies a variant of a sales feature. A sales feature may or may not have variants.<br><br>This is a part of the unique logical key. |
| Sales Feature Variant Description | It describes the sales feature variant. For example, 'Manual Drive' describes the 'Manual' variant of 'Drive' feature for a lawn mower. When a sales feature does not any variant, it describes the sales feature itself. |

## TABLE 74 SALES FEATURED DECISION TREE (New Object)

This newly defined object contains, within each end item, the parent and child relationship between sales features and their variants. This allows construction of decision trees which are suitable for question/answer type of dialogue to select the correct sales features and variants for an end item.

The relationships set forth within this table are subordinate to end items since the decision tree structures for selections for sales feature variants may be different for different end items. Additionally, common key words utilized to select a sales feature variants may in fact result in different component items being utilized for different end items.

For example, the "AM/FM Stereo" variants of the "radio" feature for a luxury automobile may result in a different end item than the same feature variants for a subcompact automobile.

This object is not under Engineering Change control.

TABLE 74 Continued

| Attribute | Attribute Usage for Configuration Effectivity Using Sales Features |
|---|---|
| End Item Identifier | It identifies an end item. An end item is defined as a finished product sold as a complete item or a repair part. Any item that is subject to a customer order or sales forecast is an end item. The end item must exist in the Master Item object.<br><br>This is a part of the unique logical key. |
| Sales Feature Variant Sequence | It is a unique sequence number for each occurrence of the combination of sales feature and sales feature variant for each end item. It may be used to display or process sales feature variants in a particular sequence. |
| Sales Feature Identifier | It is a key word identifier for a 'parent' sales feature that connects all sales features and variants for an end item in a parent child relationship resembling a tree structure. A key word representing an end item is used at the root of the tree structure. For example, 'MOWER' identifies a lawn mower (end item) at the root of the tree structure and the branches identify sales features for the lawn mower.<br><br>This is a part of the unique logical key. |
| Sales Feature Type | It is the type code or classification of a sales feature.<br><br>Suggested values:<br><br>Optional - a sales feature that can be optionally selected.<br>Mandatory - a sales feature for which a variant must be selected.<br>Accessory - an accessory that has no variants.<br>Special - a special "engineer to order" feature.<br><br>The creation of a special 'engineer to order' feature is intended to trigger a request for engineering action. A special feature can later be converted to any of the other types of feature. |

TABLE 74 continued

| Attribute | Attribute Usage for Configuration Effectivity Using Sales Features |
|---|---|
| Sales Variant Identifier | It is an identifier for a 'child' sales feature or sales variant that connects all sales features for an end item in a parent child relationship resembling a bill of material tree structure. At the lowest level (leaf) of the tree, the item identifiers are used. For example, 'WHEEL_ASY' identifies an item (wheel assembly) at the lowest level of one of the branches of the sales features tree structure.<br><br>This is a part of the unique logical key. |
| Sales Variant Type | It is the type code or classification of a sales feature variant.<br><br>Suggested values:<br><br>`Root    - an end item at the root of`<br>`            sales feature tree structure.`<br>`Feature - a sales feature variant that is not`<br>`            a customer selectable option.`<br>`Option  - a sales feature variant that is`<br>`            a customer selectable option.`<br>`(blank) - no variants for this sales feature` |
| Effective Date of Introduction | It is the date on which this sales feature is offered for sale. |
| Effective Date of Withdrawal | It is the date on which this sales feature is withdrawn from sale. It allows retention of historical data for withdrawn sales features. |
| Selling Price Indicator | It indicates whether the selling price or percent surcharge apply to the sales feature/variant.<br><br>Suggested values:<br><br>`L - List Price`<br>`S - Surcharge percentage`<br>`N - No charge feature` |
| Surcharge Percent | It indicates the percentage of surcharge that is applied to the base price in lieu of List Price for a selectable option (sales variant). |
| List Price | It is the list price for the basic end item or a selectable option (sales feature variant). For example, for the sales feature that represents a basic end item (root), it is the base price and for a selectable option, it is the incremental price (may be negative). |
| List Price Unit of Measure | It is the currency used for list price. |
| Ship Weight | It is the shipping weight for the basic end item or a selectable option (sales feature variant). For example, for the sales feature that represents a basic end item (root), it is the base weight and for a selectable option, it is the incremental weight (may be negative). |

TABLE 74 continued

| Attribute | Attribute Usage for Configuration Effectivity Using Sales Features |
|---|---|
| Ship Weight Unit of Measure | It is the unit of measure for shipping weight. |
| List Price Quantity | It is the quantity of feature variant for which the list price applies. For example, A quantity of one is used for the grass catcher. Another example is "one" group of 16 channels to be attached to a processor. |
| List Price Quantity Unit of Measure | It is the unit of measure for list price quantity. For example, A group of 16 channels for a processor may be defined as a single unit of measure for the channels. |
| Quantity Limit | It is the maximum quantity of a feature variant that can be ordered per unit of end item. For example, A quantity limit of one grass catcher can be used on a lawn mower. A spare grass catcher, if needed, should be ordered separately. Another example is a maximum quantity of 256 channels that can be attached to a processor. If the unit of measure is a group of 16 channels then 16 such units is the quantity limit. |
| Quantity Limit Unit of Measure | It is the unit of measure for quantity limit. For convenience, it should be the same as list price unit of measure. |
| Effective Date of Introduction | It is the date on which this sales feature is offered for sale. |
| Effective Date of Withdrawal | It is the date on which this sales feature is withdrawn from sale. It allows retention of historical data for withdrawn sales features. |

TABLE 76  SALES FEATURE AND ITEM RELATION (New Object)

This newly defined object is utilized to provide direct connection between sales feature and variants key word identifiers and real item identifiers. It also provides indirect connection between sales feature variants and production feature variants for the real item identifiers. For bill of material retrievals, if the production features are allowed to be specified at higher levels of assemblies than the level at which they are recorded in the bill of material it is possible to do so within this table.

This object is not under engineering control

TABLE 76 Continued

| Attribute | Attribute Usage for Configuration Effectivity Using Sales Features |
|---|---|
| End Item Identifier | It identifies an end item. An end item is defined as a finished product sold as a complete item or a repair part. Any item that is subject to a customer order or sales forecast is an end item. The end item must exist in the Master Item object.<br><br>This is a part of the unique logical key. |
| Sales Feature Identifier | It is a key word which uniquely identifies a sales feature. The sales feature may or may not have variants.<br><br>This is a part of the unique logical key. |
| Sales Variant Identifier | It is a key word which uniquely identifies a variant of a sales feature. A sales feature may or may not have variants.<br><br>This is a part of the unique logical key. |
| Sales Feature Sequence Number | It uniquely identifies each occurrence of a unique combination of sales feature and sales feature variant. It may be used for sequencing retrievals and display purposes. |
| Item Identifier | It identifies the item which is associated to the sales feature variant. If the sales feature does not have a variant then it identifies the item which is associated to the sales feature. For example, 'WHEEL_ASY' identifies an item (wheel assembly) which is required for the 'MANUAL' variant of 'DRIVE' feature. |
| Component Item Identifier | It identifies the following types of components in the BOM component object for which quantities are being specified or adjusted as per the component adjustment quantity action code:<br><br>• a customer selected standard option<br>• a basic component that is impacted by a customer selected standard option<br><br>Selection of a sales feature variant (user defined) will add components that are standard options and may cause removal of certain basic components from the same or different assemblies.<br><br>This is a part of the unique logical key. |
| Component Sequence Number | It uniquely identifies each occurrence of a specific BOM component within an assembly as found in the BOM component object.<br><br>This is a part of the unique logical key. |

TABLE 76 continued

| Attribute | Attribute Usage for Configuration Effectivity Using Sales Features |
|---|---|
| Component Item Production Feature Identifier | It is a 'key word' identifier for a production feature that is recorded in bills of material. For example, 'ENGINE' and 'WHEEL' identify production features for which more than one variants are available for configuring a lawn mower.<br><br>It is identical to the Feature Identifier in BOM component. It is used in conjunction with Production Variant Identifier for selecting the appropriate components for the item configuration. Note that it is possible to specify more than one pair of production features and variants for a single assembly to select many components. It is also possible to specify more than one pair of production features and variants for a single assembly (or end item) that spans multiple levels of BOM components. |
| Component Item Production Variant Identifier | It is a 'key word' identifier for a variant of a production feature that is recorded in the bill of material for an assembly (item). For example, 'SMALL' and 'LARGE' identify two variants of the 'WHEEL' feature.<br><br>It is identical to the Variant Identifier in BOM component. It is used in conjunction with Production Feature Identifier for selecting the appropriate components for the item configuration. Note that it is possible to specify more than one pair of production features and variants for a single assembly to select many components. It is also possible to specify more than one pair of production features and variants for a single assembly (or end item) that spans multiple levels of BOM components. |
| Component Adjustment Quantity | It indicates the component quantity that is to be used for adjusting the existing component quantity in the BOM component object. |
| Component Adjustment Quantity Unit of Measure | It is the unit of measure for component adjustment quantity. |
| Component Quantity Action Code | It indicates the action to be performed on the existing component quantity in the BOM component object using the component adjustment quantity.<br><br>Suggested values:<br><br>• A - add the adjustment quantity to the BOM component quantity<br>• R - remove (subtract) the adjustment quantity from the BOM component quantity<br>• S - substitute (replace) the BOM component quantity by the adjustment quantity |

**TABLE 78 END ITEM CONFIGURATION (EIC) SALES FEATURE (New Object)**

.This newly defined object is utilized to record customer selected sales features, including the selection path via the sales feature decision tree. A system generated configuration identifier is utilized to uniquely identify each end item configuration. This configuration identifier is not externalized. It may be obtained from a new contract end item configuration object as described herein or its equivalent existing object or objects.

This object is not under Engineering Change control.

**TABLE 78 Continued**

| Attribute | Attribute Usage for Configuration Effectivity Using Sales Features |
|---|---|
| End Item Identifier | It identifies an end item as found in the sales feature and item relation object.<br>This is a part of the unique logical key. |
| End Item Configuration Identifier | It uniquely identifies a specific configuration of the end item as found in the EIC header object. It is not externalized.<br>This is a part of the unique logical key which must match with a logical key of the EIC header object. |
| Sales Feature Variant Sequence | It identifies a sales feature variant sequence number as found in the sales feature decision tree object. |
| Sales Feature Identifier | It identifies a sales feature as found in the sales feature decision tree object.<br>This is a part of the unique logical key. |
| Sales Variant Identifier | It identifies a sales feature variant as found in the sales feature decision tree object.<br>This is a part of the unique logical key. |
| Sales Feature Variant Quantity | It is the quantity of a sales feature variants ordered (or quoted) per unit of end item. For example, A quantity of one grass catcher can be ordered on a lawn mower. A spare grass catcher, if needed, should be ordered separately. Another example is 4 groups of channels ordered for attachment to a processor. If the unit of measure is a group of 16 channels then a total of 64 channels are in the configuration. The end item quantity at the root of the sales feature decision tree can also be recorded. Then the feature variant quantities will need to be multiplied by the end item quantity. |
| Sales Feature Variant Quantity Unit of Measure | It is the unit of measure for sales feature variant quantity. For convenience, it should be the same as list price unit of measure. |

Upon reference to the foregoing those skilled in the art will appreciate that the system data object and relationships depicted within Figure 2 show data relationships rather than data flow.

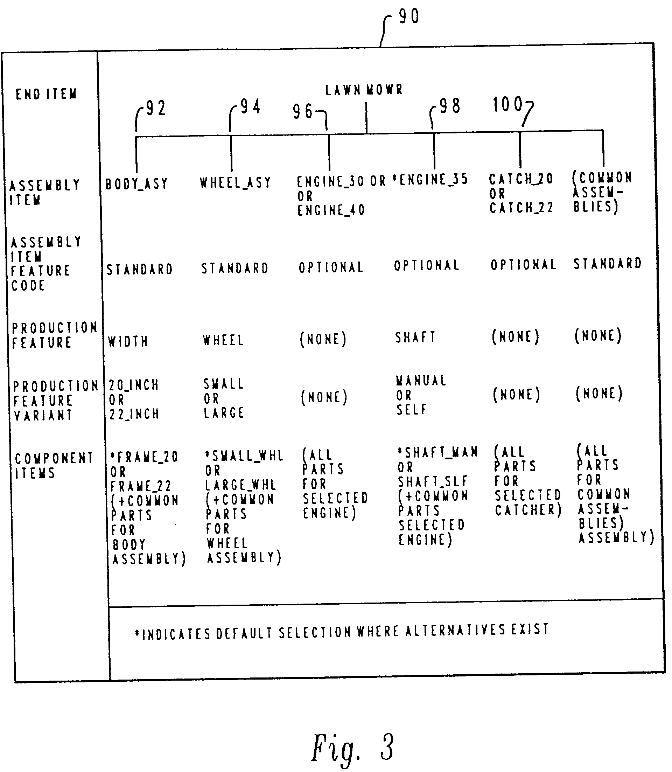

With reference now to Figure 3 there is depicted a schematic diagram of a bill of material showing a traditional implementation of production features. In this implementation the key word attributes of production features are embedded within bill of material 90. The illustrated bill of material 90 includes all possible configurations of a lawn mower which may be ordered by customers. The bill of material includes modular bills of material for a body assembly at reference numeral 92, a wheel assembly at reference numeral 94, three optional engines of 3.0, 3.5 and 4.0 horse power ratings at reference numerals 96 and 98, and two optional grass catchers at reference numeral 100. A functional lawn mower may be constructed by assembling one body assembly, one wheel assembly and any one of the three engines with certain restrictions on allowable combinations. The optional grass catcher listed at reference numeral 100 is, as those skilled in the art will appreciate, not required for a functioning lawn mower.

While it is not essential to do so, the examples set forth within Figure 3 also defines a "generic" lawn mower containing the three engines and the grass catcher as optional features and other assemblies as standard features. If such generic end items is not defined then equivalent sales feature relationships may still be established to select only one body assembly, only one wheel assembly, only one engine and an optional grass catcher. In this case a dummy end item identifier which may or may not exist in the master item object may be utilized. To ensure proper referential integrity the dummy end identifier should be available in the master item object but it need not have a bill of material.

Each of the modular assembly bills of material set forth within bill of material 90 contains "production" feature variants which may be selected directly by the user or indirectly via sales feature selections. If the production feature WIDTH variant 20_INCH is selected for the body assembly, then a 20_inch frame, FRAME_20, is included in the body assembly. If feature CUT variant 22_INCH is selected for the body assembly, then a 22_INCH frame, FRAME_22, is included in the body assembly. If no variant is selected for the body assembly then a default 20-inch frame is included in the body assembly.

Similarly, for the wheel assembly, feature WHEEL, variant SMALL, includes a set of small wheels, feature WHEEL, variant LARGE, includes a set of large wheels and the default selection is a set of small wheels. An indirect selection of a lower level component based on DRIVE selection is also shown for the 3.5 horse power engine. A different engine shaft. (SHAFT_SLF that has a drive gear) is utilized if feature SHAFT, variant SELF is selected.

This method of selecting production features is one of the traditional implementations which has been utilized for many years. There is no need to discard this proven technique and substituting it with "sales" feature variants may achieve the same result. By allowing this implementation of "production" feature variants to coexist with a new implementation "sales" feature variants, restructuring of existing bills of material may be avoided in most cases. Difficulties may arise where the use of this technique has been stretched to incorporate sales feature variants within the bills of material, thus making the product structure very complex and inflexible to allow new changes to be made to the existing product structure.

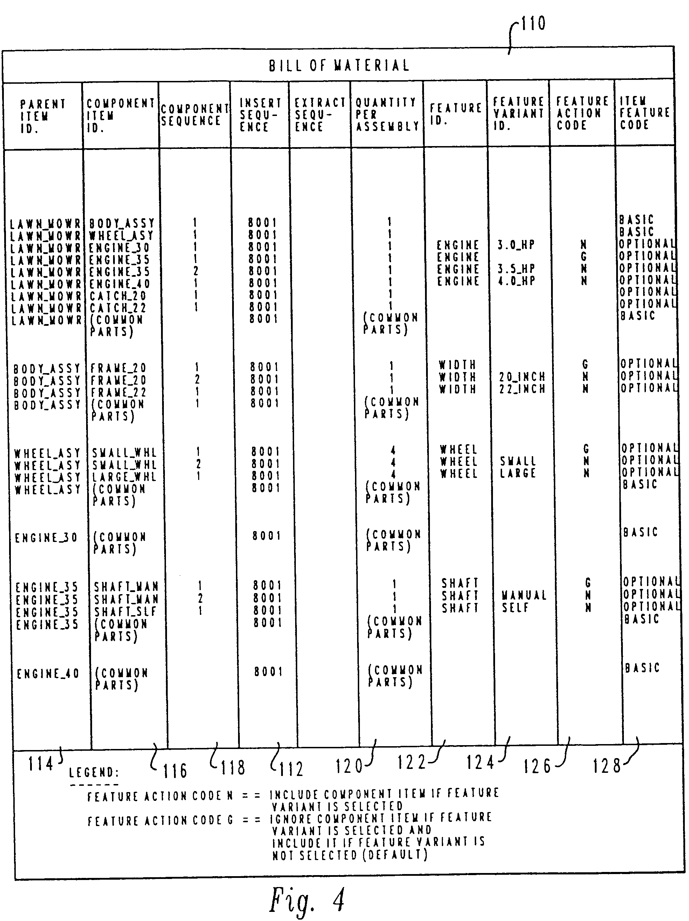

Referring now to Figure 4 there is depicted a graphic illustration of a generic bill of material 110 which may be stored within a relational database table in accordance with the method and system of the present invention. The bill of material 110 is preferably initially defined by an engineering change process. The engineering change information, its affected item data and effectivity data are not shown. A suitable implementation of a contract end item configuration effectivity, such as the one disclosed in the cross-referenced patent application, is assumed. It is further assumed that the engineering change affected item has been assigned and implementation sequence is 8001. This number is utilized in the bill of material as the inserting Engineering Change sequence number shown in the insert sequence column at reference numeral 112.

The parent child relationships between assemblies and component items are recorded in the parent item identifier and component item identifier columns, at reference numerals 114 and 116 respectively. It should be noted that the component item identifiers for common parts are now shown in Figure 4. The component sequence column at reference numeral 118 allows multiple occurrences of the same component to be sequenced as shown for component ENGINE_3.5 and other components. The quantity per assembly column, at reference numeral 120, shows the quantity of each component utilized in the parent assembly. It should be noted that the quantities of common parts are not shown within Figure 4. The feature identifier and feature variant identifier columns contain the "production" features and their variants, as depicted at reference numeral 122 and 124. The feature action code at reference numeral 126 contains a code which is explained within the legend at the bottom of bill of material 110. The item feature code column as set forth at reference numeral 128 indicates whether or not a component item is a basic component or a selectable option.

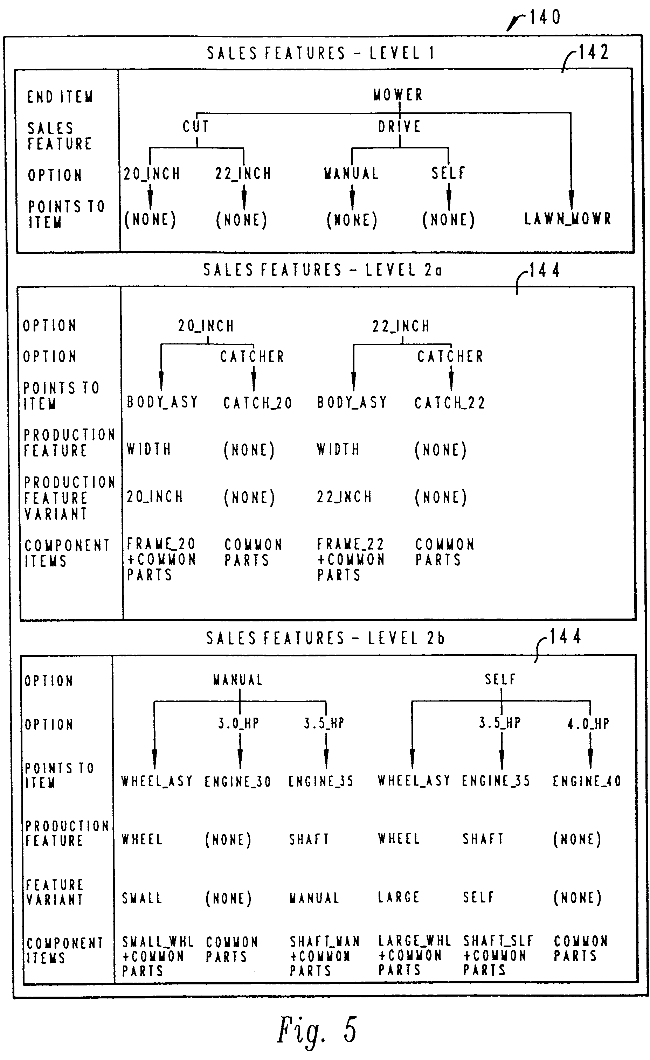

With reference now to Figure 5 there is depicted an illustration of the creation of a decision tree for stepwise selection of sales features and variants in accordance with the method and system of the present invention. As described above, the bills of material contain "production" features and variants which may be selected indirectly by "sales" feature variant selection. Clear separation between sales and production feature variants must be maintained in order to avoid any impact on the bill of material as a result of automating the process of configuration generation utilizing sales features.

As depicted within Figure 5, the decision tree structure generally illustrated at reference numeral 140 is depicted in three sections. At reference numeral 142, the Sales Features, LEVEL 1 Section shows an end item MOWER at the root of the tree structure. The tree points to the end item LAWN_MOWR and to the first level of variants CUT and DRIVE. One more level of variants for CUT and DRIVE are also shown in this section of the decision tree.

Reference numeral 144 depicts a second section of the decision tree Sales Features LEVEL 2a. This section of the decision tree shows the variants of the CUT feature (20_INCH and 22_INCH) which point to other selectable variants. All of these variants finally connect to items in the bills of material which contain production features and variants for further selection of components within the bills of material.

Finally, reference numeral 146 illustrates a third section of the decision tree Sales Features LEVEL 2b. This section of the decision tree shows the variants of the DRIVE feature (MANUAL and SELF), which point to other selectable variants. All of these variants finally connect to items in the bills of material which contain production features and variants for further selection of components within the bills of material.

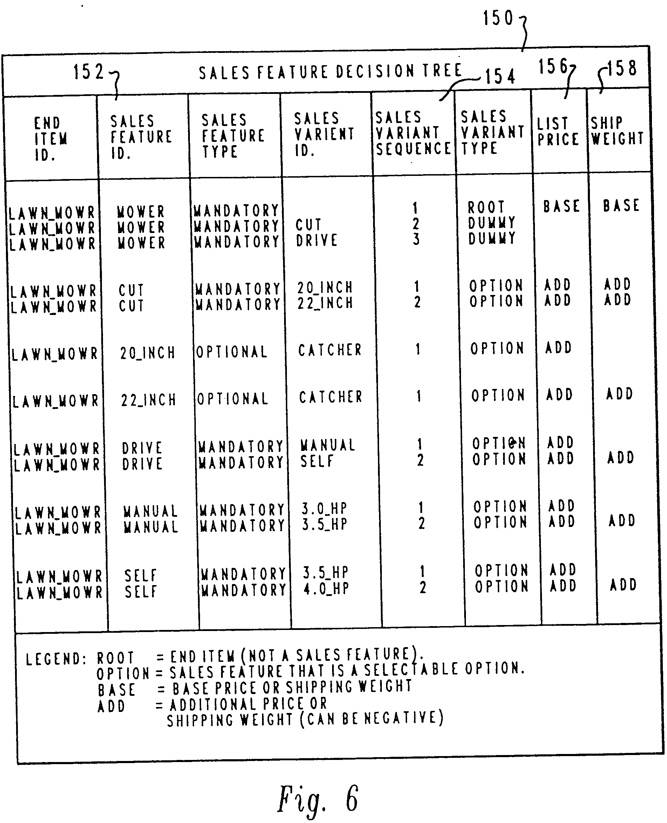

Referring now to Figure 6, there is depicted a graphic illustration of a decision tree for implementing selection rules for sales features and variants in accordance with the method and system of the present invention. The sales feature decision tree 150 may be utilized to provide stepwise guidance to a customer for selection of correct combinations of sales features and variants for a simple to moderately complex end item. The example depicted within Figure 6 is based upon the bill of material depicted within Figure 4 and the decision tree structure illustrated within Figure 5.

The customer selected and ordered end item configurations may be alterated from this decision tree. The decision tree, illustrated at reference numeral 150, is traversed by utilizing the sales feature identifier as illustrated at reference numeral 152 and the sales variants identifier depicted at reference numeral 154. The end item LAWN_MOWR is identified as the root sales feature MOWER, having a base list price and a base shipping weight as set forth at reference numerals 156 and 158 respectively. The incremental list prices and shipping weights for other sales features are also recorded in order to permit the computing of the total list price for a specific MOWER configuration. The MOWER variants, CUT and DRIVE, are dummy variants, since both CUT and DRIVE must be chosen. CUT and DRIVE appear as sales variants at the intermediate node with their own variants. For example, 20_INCH and 22_INCH variants of the CUT feature are selectable options. The 20-inch CUT option is included in the base price and shipping weight and the incremental price and weight for the 22-inch CUT option are recorded.

The sales feature identifier and sales variants identifier for the intermediate nodes are utilized to construct user dialogs in the form of questions and answers. For example, the sales feature DRIVE may be utilized to ask a question such as "Which drive do you want?" The variants MANUAL and SELF are then utilized as multiple choice answers, such as: "You may chose a MANUAL drive or a SELF propelled drive." Production features and variants are not utilized in such a dialog.

In the following example sales features are presented to a user utilizing two levels of option selection:

First level of selections:

Since the end item MOWER is first selected, the feature and option identifiers for the children-of MOWER are first examined. The children have two features, CUT and DRIVE, and both are mandatory features. These features are not of the type which are utilized for user dialogues. Thus, the user proceeds to the next level where both features CUT and DRIVE have children that have a selectable option. At this point two questions are asked of the user with the following multiple choice answers:

Which CUT do you want? The choices are:
1) 20_INCH
2) 22_INCH

Which DRIVE do you want? The choices are:
1) MANUAL
2) SELF

Second level of selections:

Assuming that the customer selected a 22-inch cut and manual drive, the following questions are asked at the second level:

Optional catcher?
1) Yes
2) No

Which engine do you want? The choices are:
1) 3.0_HP
2) 3.5_HP

In the above example the illustrated question and answer dialog traverses the decision tree horizontally

23

from left to right and then to the next level down. An alternative approach could be utilized to traverse the tree vertically, from top to bottom, one branch at a time and then from left to the adjacent branch on the right. Any of these traversal techniques may be utilized based on performance, usability and other user selected considerations.

Proper tree structuring of sales feature variants will always produce valid configurations without requiring elaborate rules for validation of the configurations. With tree structuring of sales feature variants, the relationships between these variants are highly visible and comprehensible. This method of structuring the decision tree is also very suitable for stepwise selection of feature variants as described above.

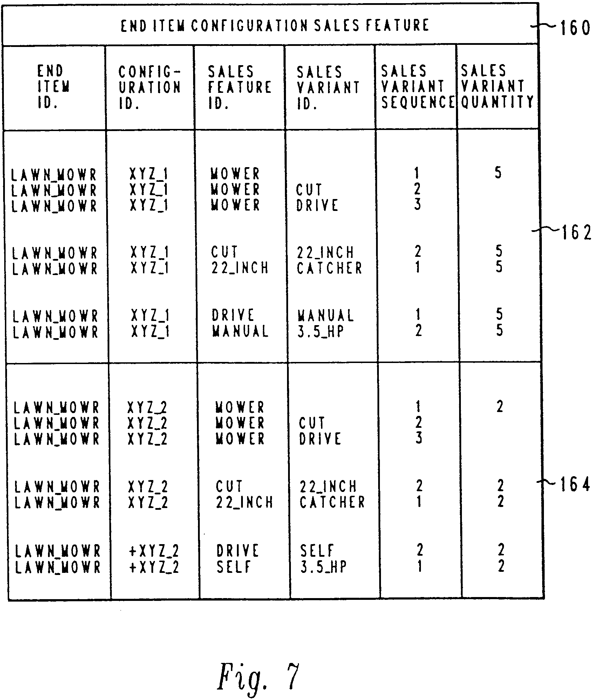

With reference now to Figure 7 there is depicted an illustration of captured customer selected sales features and variants in accordance with the method and system of the present invention. The captured customer selected sales features and variants listed within table 160 are examples of two scenarios of customer ordered end item configurations. In the first scenario customer XYZ ordered five lawn mowers with 22-inch cut width and manual drive with 3.5 horse power engines. A specific configuration is therefore constructed from the generic bill of material for lawn mowers and it is assigned a configuration identifier XYZ_1, as depicted at reference numeral 162. Next, a quotation was prepared for the same customer to purchase two additional lawn mowers similar to the configuration identified as XYZ_1, except that these lawn mowers will have self-propelled drive. This lawn mower configuration was assigned a configuration identifier of XYZ_2, as illustrated at reference numeral 164.

The configuration identifiers referenced above are system generated and are stored in a contract end item configuration object or its equivalent relationship between customer contracts and end item configuration identifiers (not shown). Thus, the connection between customer contracts and end item configuration identifiers are assumed to be available, in a manner such as that set forth within the cross-referenced patent application.

In addition to the configuration identifiers, the end item and sales variant quantities are also recorded for price and weight computations. Information in other columns of the captured customer selected sales feature and variants table depicted at reference numeral 160 are copied directly from the sales feature decision tree shown within Figure 6.

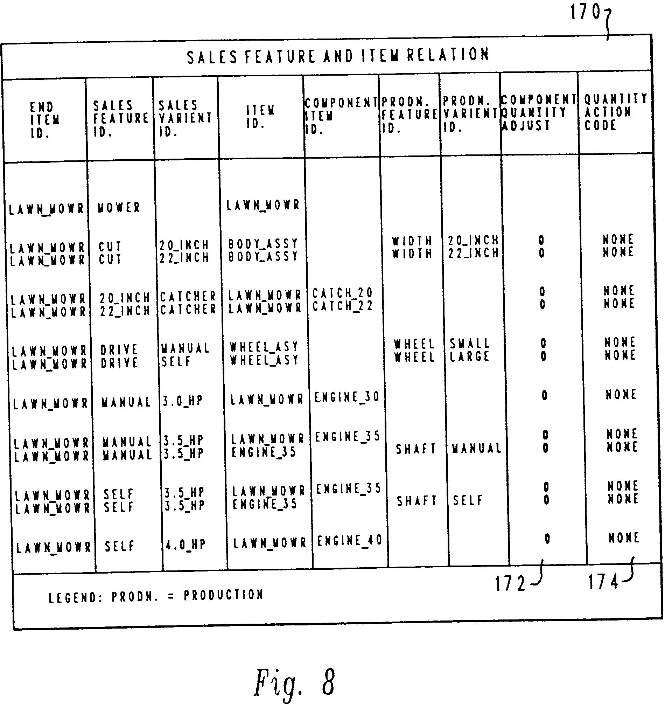

Referring now to Figure 8, there is illustrated the establishment of direct relationships between sales features and items in a bill of material in accordance with the method and system of the present invention. As depicted at reference numeral 170, the establishment of an indirect relationship between sales features and production features is illustrated via the relationships between sales features and items and relationships between items and production features. For example, the CATCHER variant of 20_INCH sales feature points to the CATCH_20 component of LAWN_MOWER item. The CATCH_20 component in the bill of material of LAWN_MOWER has "optional" indications in its "item feature code attribute". This connection between components and a bill of material cannot be established for those components which are to be selected via production feature selection. Therefore, instead of specifying the component items the production features and variants for the items are specified. For example, the 20_INCH variant of the CUT sales feature points to the 20_INCH variant of the WIDTH production feature of BODY_ASSY item. The component item identifier is not specified in this case.

The illustration above as an example of adding components with quantities as specified in the bill of material. It is also possible that selection of a sales feature may require removal or reduction of quantities of other components. Such components are also entered in table 170 within Figure 8. The component quantity adjustment column at reference numeral 172 will contain an incremental quantity, and the quantity action code column, at reference numeral 174, will contain the action to be performed, such as addition, subtraction or replacement of the original quantity as found in the bill of material..

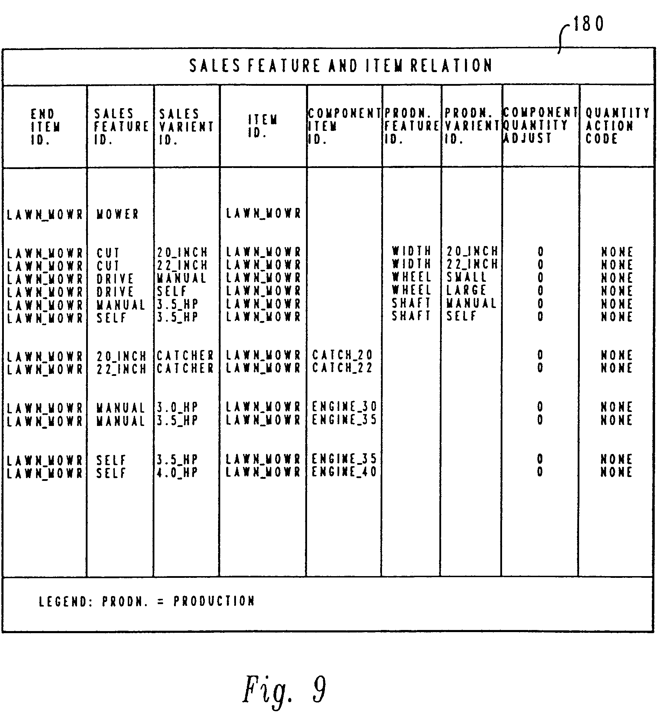

With reference now to Figure 9, there is illustrated an alternative method of establishing relationships between sales features and production features in accordance with the method and system of the present invention. As depicted at reference numeral 180 within Figure 9, there is illustrated the establishment of a relationship between sales features utilizing the same relationship object previously depicted in Figure 8. All key words representing production features and variants are specified against the end item LAWN_MOWER itself, rather than specifying the production features and variants for items at lower levels in the bill of material. The only limitation in this approach is that the key words utilized must be unique across all levels of the bill of material for correct selection of components. It is also possible to use this approach at any level of the bill of material without restricting it to the end item level. The retrieval logic will be able to easily support both types of relationships as shown in Figure 8 and Figure 9 respectively.

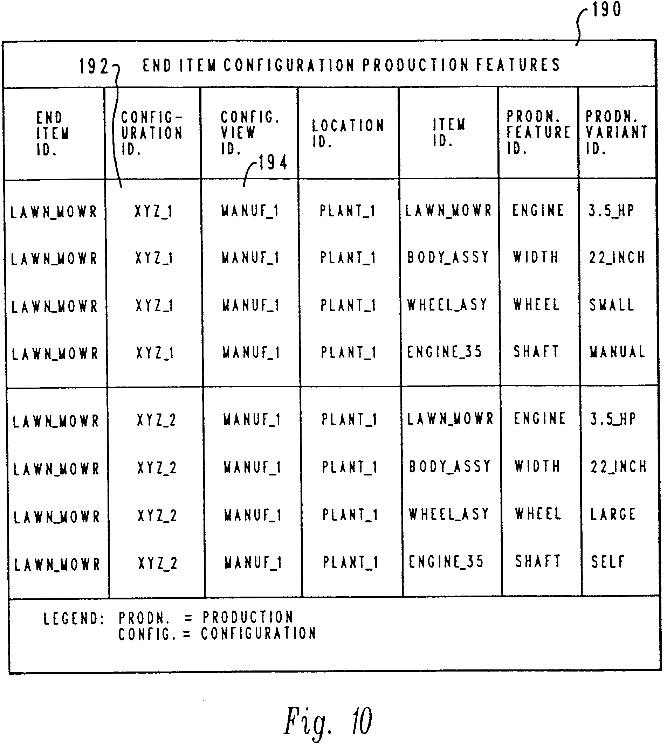

Referring now to Figure 10 there is illustrated a method for generating required production features in accordance with the method and system of the present invention. The end item configuration production features Table 190 depicted within Figure 10 illustrates the method of generating the required production features after customer selected sales features variants have been captured in the end item configuration sales feature previously depicted in Figure 7. This illustration is based upon the bill of materials shown within Figure 4. The end item configuration production feature object depicted at reference numeral 150 contains a subset of the information contained in the sales feature and item relation object for the customer selected sales features as recorded in the end item configuration sales feature object. Table 190 contains only the items for which the production features, rather than the components are specified. The configuration identifier is also included within column 192 in order to uniquely identify the customer contracted configuration. Other attributes present within Table 190 include configuration view identifier within a column 194 which is utilized to allow manufacturing restructure of engineering view of the configurations.

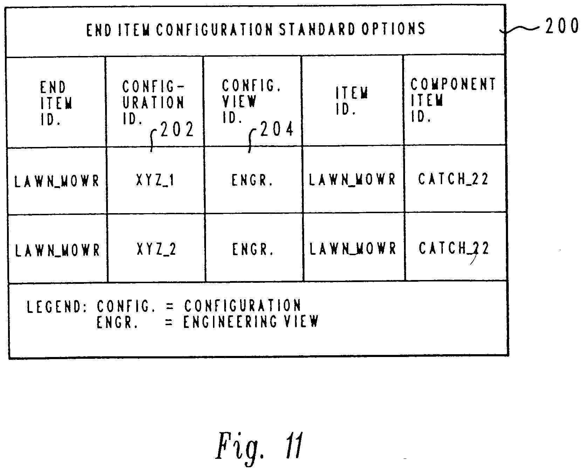

Finally, with reference to Figure 11, there is depicted a method of generating required standard options in accordance with the method and system of the present invention. After customer selected sales feature variants have been captured in the end item configuration sales feature object shown in Figure 7, required standard options may be generated as illustrated in the Figure 11 at reference numeral 200. This illustration is based upon the bill of materials set forth within Figure 4. The end item configuration standard option object depicted at reference numeral 200 within Figure 11 contains a subset of the information contained within the sales feature and item relation object for the customer selected sales features as recorded in the end item configuration sales feature object. Table 200 includes only those items for which components rather than production features are specified. The configuration identifier is also set forth within column 202 in order to uniquely identify the customer contracted configuration. Other attributes within Table 200 include a configuration view identifier within column 204 in order to permit manufacturing restructure of engineering view of the configurations.

Upon reference to the foregoing those skilled in the art will appreciate that the method and system of the present invention may be utilized to capture customer selected combinations of sales features and feature variants and to construct a specific product configuration utilizing those captured and feature variants without impacting the product bill of material. By indirectly associating production features with the captured sales feature utilizing key words it is possible to create a end item configuration list comprising a listing of components and variations of components which are necessary to manufacture a configuration of a complex product having the customer's desired combination of sales features and variants.

## Claims

1. A computer based method for product configuration management in the manufacture of a complex product having multiple diverse configurations, said method being characterized in that it comprises :

   presenting a customer with a plurality of sales features and variants;

   permitting said customer to select desired non-conflicting sales features and variants; and

   utilizing said desired non-conflicting sales features and variants to create an end item configuration list comprising a listing of components and variations of components necessary to manufacture a configuration of said complex product having said desired non-conflicting sales features and variants.

2. The method according to Claim 1, characterized in that said step of permitting said customer to select desired non-conflicting sales features and variants comprises the step of creating a decision tree including said plurality of sales features and variants and permitting said customer to traverse said decision tree.

3. The method according to Claim 1, further including the step of permitting said customer to specify a non-standard sales feature.

4. The method according to Claim 1, further including the step of creating a bill of material including all possible components and variations of components for said complex product.

5. The method according to Claim 4, further including the step of designating selected components and variations of components within said bill of material as default components to be utilized in the absence of a selection by said customer.

6. The method according to Claim 1, wherein said step of creating an end item configuration list comprising a listing of components and variations of components necessary to manufacture a configuration of said complex product having said desired non-conflicting sales features and variants occurs in response to an entry of an order by said customer.

7. A data processing system for product configuration management in the manufacture of a complex product having multiple diverse configurations, said data processing system comprising:

means for presenting a customer with a plurality of sales features and variants;

means for permitting said customer to select desired non-conflicting sales features and variants; and

means for creating an end item configuration list utilizing said desired non-conflicting sales features and variants, said end item configuration list comprising a listing of components and variations of components necessary to manufacture a configuration of said complex product having said desired nonconflicting sales features and variants.

*Fig. 1*

Fig. 2

90

| END ITEM | LAWN MOWR | | | | | |
|---|---|---|---|---|---|---|
| | 92 | 94 | 96 | | 98 | 100 |
| ASSEMBLY ITEM | BODY_ASY | WHEEL_ASY | ENGINE_30 OR OR ENGINE_40 | *ENGINE_35 | CATCH_20 OR CATCH_22 | (COMMON ASSEM-BLIES) |
| ASSEMBLY ITEM FEATURE CODE | STANDARD | STANDARD | OPTIONAL | OPTIONAL | OPTIONAL | STANDARD |
| PRODUCTION FEATURE | WIDTH | WHEEL | (NONE) | SHAFT | (NONE) | (NONE) |
| PRODUCTION FEATURE VARIANT | 20_INCH OR 22_INCH | SMALL OR LARGE | (NONE) | MANUAL OR SELF | (NONE) | (NONE) |
| COMPONENT ITEMS | *FRAME_20 OR FRAME_22 (+COMMON PARTS FOR BODY ASSEMBLY) | *SMALL_WHL OR LARGE_WHL (+COMMON PARTS FOR WHEEL ASSEMBLY) | (ALL PARTS FOR SELECTED ENGINE) | *SHAFT_MAN OR SHAFT_SLF (+COMMON PARTS SELECTED ENGINE) | (ALL PARTS FOR SELECTED CATCHER) | (ALL PARTS FOR COMMON ASSEM-BLIES) ASSEMBLY) |

*INDICATES DEFAULT SELECTION WHERE ALTERNATIVES EXIST

*Fig. 3*

~110

| BILL OF MATERIAL | | | | | | | | | |
|---|---|---|---|---|---|---|---|---|---|
| PARENT ITEM ID. | COMPONENT ITEM ID. | COMPONENT SEQUENCE | INSERT SEQU-ENCE | EXTRACT SEQU-ENCE | QUANTITY PER ASSEMBLY | FEATURE ID. | FEATURE VARIANT ID. | FEATURE ACTION CODE | ITEM FEATURE CODE |
| LAWN_MOWR | BODY_ASSY | 1 | 8001 | | 1 | | | | BASIC |
| LAWN_MOWR | WHEEL_ASY | 1 | 8001 | | 1 | | | | BASIC |
| LAWN_MOWR | ENGINE_30 | 1 | 8001 | | 1 | ENGINE | 3.0_HP | N | OPTIONAL |
| LAWN_MOWR | ENGINE_35 | 1 | 8001 | | 1 | ENGINE | | G | OPTIONAL |
| LAWN_MOWR | ENGINE_35 | 2 | 8001 | | 1 | ENGINE | 3.5_HP | N | OPTIONAL |
| LAWN_MOWR | ENGINE_40 | 1 | 8001 | | 1 | ENGINE | 4.0_HP | N | OPTIONAL |
| LAWN_MOWR | CATCH_20 | 1 | 8001 | | 1 | | | | OPTIONAL |
| LAWN_MOWR | CATCH_22 | 1 | 8001 | | 1 | | | | OPTIONAL |
| LAWN_MOWR | (COMMON PARTS) | | 8001 | | (COMMON PARTS) | | | | BASIC |
| BODY_ASSY | FRAME_20 | 1 | 8001 | | 1 | WIDTH | | G | OPTIONAL |
| BODY_ASSY | FRAME_20 | 2 | 8001 | | 1 | WIDTH | 20_INCH | N | OPTIONAL |
| BODY_ASSY | FRAME_22 | 1 | 8001 | | 1 | WIDTH | 22_INCH | N | OPTIONAL |
| BODY_ASSY | (COMMON PARTS) | 1 | 8001 | | (COMMON PARTS) | | | | |
| WHEEL_ASY | SMALL_WHL | 1 | 8001 | | 4 | WHEEL | | G | OPTIONAL |
| WHEEL_ASY | SMALL_WHL | 2 | 8001 | | 4 | WHEEL | SMALL | N | OPTIONAL |
| WHEEL_ASY | LARGE_WHL | 1 | 8001 | | 4 | WHEEL | LARGE | N | OPTIONAL |
| WHEEL_ASY | (COMMON PARTS) | | 8001 | | (COMMON PARTS) | | | | BASIC |
| ENGINE_30 | (COMMON PARTS) | | 8001 | | (COMMON PARTS) | | | | BASIC |
| ENGINE_35 | SHAFT_MAN | 1 | 8001 | | 1 | SHAFT | | G | OPTIONAL |
| ENGINE_35 | SHAFT_MAN | 2 | 8001 | | 1 | SHAFT | MANUAL | N | OPTIONAL |
| ENGINE_35 | SHAFT_SLF | 1 | 8001 | | 1 | SHAFT | SELF | N | OPTIONAL |
| ENGINE_35 | (COMMON PARTS) | | 8001 | | (COMMON PARTS) | | | | BASIC |
| ENGINE_40 | (COMMON PARTS) | | 8001 | | (COMMON PARTS) | | | | BASIC |

114 — 116 — 118 — 112 — 120 — 122 — 124 — 126 — 128

LEGEND:
------
FEATURE ACTION CODE N = = INCLUDE COMPONENT ITEM IF FEATURE VARIANT IS SELECTED
FEATURE ACTION CODE G = = IGNORE COMPONENT ITEM IF FEATURE VARIANT IS SELECTED AND INCLUDE IT IF FEATURE VARIANT IS NOT SELECTED (DEFAULT)

*Fig. 4*

140

**SALES FEATURES – LEVEL 1** 142

| | |
|---|---|
| END ITEM | MOWER |
| SALES FEATURE | CUT / DRIVE |
| OPTION | 20_INCH / 22_INCH / MANUAL / SELF |
| POINTS TO ITEM | (NONE) / (NONE) / (NONE) / (NONE) / LAWN_MOWR |

**SALES FEATURES – LEVEL 2a** 144

| | | | | |
|---|---|---|---|---|
| OPTION | 20_INCH | | 22_INCH | |
| OPTION | | CATCHER | | CATCHER |
| POINTS TO ITEM | BODY_ASY | CATCH_20 | BODY_ASY | CATCH_22 |
| PRODUCTION FEATURE | WIDTH | (NONE) | WIDTH | (NONE) |
| PRODUCTION FEATURE VARIANT | 20_INCH | (NONE) | 22_INCH | (NONE) |
| COMPONENT ITEMS | FRAME_20 +COMMON PARTS | COMMON PARTS | FRAME_22 +COMMON PARTS | COMMON PARTS |

**SALES FEATURES – LEVEL 2b** 144

| | | | | | | |
|---|---|---|---|---|---|---|
| OPTION | MANUAL | | | SELF | | |
| OPTION | | 3.0_HP | 3.5_HP | | 3.5_HP | 4.0_HP |
| POINTS TO ITEM | WHEEL_ASY | ENGINE_30 | ENGINE_35 | WHEEL_ASY | ENGINE_35 | ENGINE_40 |
| PRODUCTION FEATURE | WHEEL | (NONE) | SHAFT | WHEEL | SHAFT | (NONE) |
| FEATURE VARIANT | SMALL | (NONE) | MANUAL | LARGE | SELF | (NONE) |
| COMPONENT ITEMS | SMALL_WHL +COMMON PARTS | COMMON PARTS | SHAFT_MAN +COMMON PARTS | LARGE_WHL +COMMON PARTS | SHAFT_SLF +COMMON PARTS | COMMON PARTS |

*Fig. 5*

| END ITEM ID. | SALES FEATURE ID. | SALES FEATURE TYPE | SALES VARIENT ID. | SALES VARIANT SEQUENCE | SALES VARIANT TYPE | LIST PRICE | SHIP WEIGHT |
|---|---|---|---|---|---|---|---|
| LAWN_MOWR | MOWER | MANDATORY | | 1 | ROOT | BASE | BASE |
| LAWN_MOWR | MOWER | MANDATORY | CUT | 2 | DUMMY | | |
| LAWN_MOWR | MOWER | MANDATORY | DRIVE | 3 | DUMMY | | |
| LAWN_MOWR | CUT | MANDATORY | 20_INCH | 1 | OPTION | ADD | ADD |
| LAWN_MOWR | CUT | MANDATORY | 22_INCH | 2 | OPTION | ADD | ADD |
| LAWN_MOWR | 20_INCH | OPTIONAL | CATCHER | 1 | OPTION | ADD | |
| LAWN_MOWR | 22_INCH | OPTIONAL | CATCHER | 1 | OPTION | ADD | ADD |
| LAWN_MOWR | DRIVE | MANDATORY | MANUAL | 1 | OPTION | ADD | |
| LAWN_MOWR | DRIVE | MANDATORY | SELF | 2 | OPTION | ADD | ADD |
| LAWN_MOWR | MANUAL | MANDATORY | 3.0_HP | 1 | OPTION | ADD | |
| LAWN_MOWR | MANUAL | MANDATORY | 3.5_HP | 2 | OPTION | ADD | ADD |
| LAWN_MOWR | SELF | MANDATORY | 3.5_HP | 1 | OPTION | ADD | |
| LAWN_MOWR | SELF | MANDATORY | 4.0_HP | 2 | OPTION | ADD | ADD |

Table title: SALES FEATURE DECISION TREE (150, 152, 154, 156, 158)

LEGEND: ROOT = END ITEM (NOT A SALES FEATURE).
OPTION = SALES FEATURE THAT IS A SELECTABLE OPTION.
BASE = BASE PRICE OR SHIPPING WEIGHT
ADD = ADDITIONAL PRICE OR
SHIPPING WEIGHT (CAN BE NEGATIVE)

*Fig. 6*

| END ITEM CONFIGURATION SALES FEATURE | | | | | | ~160 |
|---|---|---|---|---|---|---|
| END ITEM ID. | CONFIG-URATION ID. | SALES FEATURE ID. | SALES VARIANT ID. | SALES VARIANT SEQUENCE | SALES VARIANT QUANTITY | |
| LAWN_MOWR | XYZ_1 | MOWER | | 1 | 5 | ~162 |
| LAWN_MOWR | XYZ_1 | MOWER | CUT | 2 | | |
| LAWN_MOWR | XYZ_1 | MOWER | DRIVE | 3 | | |
| LAWN_MOWR | XYZ_1 | CUT | 22_INCH | 2 | 5 | |
| LAWN_MOWR | XYZ_1 | 22_INCH | CATCHER | 1 | 5 | |
| LAWN_MOWR | XYZ_1 | DRIVE | MANUAL | 1 | 5 | |
| LAWN_MOWR | XYZ_1 | MANUAL | 3.5_HP | 2 | 5 | |
| LAWN_MOWR | XYZ_2 | MOWER | | 1 | 2 | ~164 |
| LAWN_MOWR | XYZ_2 | MOWER | CUT | 2 | | |
| LAWN_MOWR | XYZ_2 | MOWER | DRIVE | 3 | | |
| LAWN_MOWR | XYZ_2 | CUT | 22_INCH | 2 | 2 | |
| LAWN_MOWR | XYZ_2 | 22_INCH | CATCHER | 1 | 2 | |
| LAWN_MOWR | +XYZ_2 | DRIVE | SELF | 2 | 2 | |
| LAWN_MOWR | +XYZ_2 | SELF | 3.5_HP | 1 | 2 | |

Fig. 7

170

| SALES FEATURE AND ITEM RELATION | | | | | | | | |
|---|---|---|---|---|---|---|---|---|
| END ITEM ID. | SALES FEATURE ID. | SALES VARIENT ID. | ITEM ID. | COMPONENT ITEM ID. | PRODN. FEATURE ID. | PRODN. VARIENT ID. | COMPONENT QUANTITY ADJUST | QUANTITY ACTION CODE |
| LAWN_MOWR | MOWER | | LAWN_MOWR | | | | | |
| LAWN_MOWR | CUT | 20_INCH | BODY_ASSY | | WIDTH | 20_INCH | 0 | NONE |
| LAWN_MOWR | CUT | 22_INCH | BODY_ASSY | | WIDTH | 22_INCH | 0 | NONE |
| LAWN_MOWR | 20_INCH | CATCHER | LAWN_MOWR | CATCH_20 | | | 0 | NONE |
| LAWN_MOWR | 22_INCH | CATCHER | LAWN_MOWR | CATCH_22 | | | 0 | NONE |
| LAWN_MOWR | DRIVE | MANUAL | WHEEL_ASY | | WHEEL | SMALL | 0 | NONE |
| LAWN_MOWR | DRIVE | SELF | WHEEL_ASY | | WHEEL | LARGE | 0 | NONE |
| LAWN_MOWR | MANUAL | 3.0_HP | LAWN_MOWR | ENGINE_30 | | | 0 | NONE |
| LAWN_MOWR | MANUAL | 3.5_HP | LAWN_MOWR | ENGINE_35 | | | 0 | NONE |
| LAWN_MOWR | MANUAL | 3.5_HP | ENGINE_35 | | SHAFT | MANUAL | 0 | NONE |
| LAWN_MOWR | SELF | 3.5_HP | LAWN_MOWR | ENGINE_35 | | | 0 | NONE |
| LAWN_MOWR | SELF | 3.5_HP | ENGINE_35 | | SHAFT | SELF | 0 | NONE |
| LAWN_MOWR | SELF | 4.0_HP | LAWN_MOWR | ENGINE_40 | | | 0 | NONE |

172   174

LEGEND: PRODN. = PRODUCTION

Fig. 8

180

| SALES FEATURE AND ITEM RELATION | | | | | | | | |
|---|---|---|---|---|---|---|---|---|
| END ITEM ID. | SALES FEATURE ID. | SALES VARIENT ID. | ITEM ID. | COMPONENT ITEM ID. | PRODN. FEATURE ID. | PRODN. VARIENT ID. | COMPONENT QUANTITY ADJUST | QUANTITY ACTION CODE |
| LAWN_MOWR | MOWER | | LAWN_MOWR | | | | | |
| LAWN_MOWR | CUT | 20_INCH | LAWN_MOWR | | WIDTH | 20_INCH | 0 | NONE |
| LAWN_MOWR | CUT | 22_INCH | LAWN_MOWR | | WIDTH | 22_INCH | 0 | NONE |
| LAWN_MOWR | DRIVE | MANUAL | LAWN_MOWR | | WHEEL | SMALL | 0 | NONE |
| LAWN_MOWR | DRIVE | SELF | LAWN_MOWR | | WHEEL | LARGE | 0 | NONE |
| LAWN_MOWR | MANUAL | 3.5_HP | LAWN_MOWR | | SHAFT | MANUAL | 0 | NONE |
| LAWN_MOWR | SELF | 3.5_HP | LAWN_MOWR | | SHAFT | SELF | 0 | NONE |
| LAWN_MOWR | 20_INCH | CATCHER | LAWN_MOWR | CATCH_20 | | | 0 | NONE |
| LAWN_MOWR | 22_INCH | CATCHER | LAWN_MOWR | CATCH_22 | | | 0 | NONE |
| LAWN_MOWR | MANUAL | 3.0_HP | LAWN_MOWR | ENGINE_30 | | | 0 | NONE |
| LAWN_MOWR | MANUAL | 3.5_HP | LAWN_MOWR | ENGINE_35 | | | 0 | NONE |
| LAWN_MOWR | SELF | 3.5_HP | LAWN_MOWR | ENGINE_35 | | | 0 | NONE |
| LAWN_MOWR | SELF | 4.0_HP | LAWN_MOWR | ENGINE_40 | | | 0 | NONE |

LEGEND: PRODN. = PRODUCTION

Fig. 9

| 192 END ITEM CONFIGURATION PRODUCTION FEATURES | | | | | | |
|---|---|---|---|---|---|---|
| END ITEM ID. | CONFIG-URATION ID. | CONFIG. VIEW ID. 194 | LOCATION ID. | ITEM ID. | PRODN. FEATURE ID. | PRODN. VARIANT ID. |
| LAWN_MOWR | XYZ_1 | MANUF_1 | PLANT_1 | LAWN_MOWR | ENGINE | 3.5_HP |
| LAWN_MOWR | XYZ_1 | MANUF_1 | PLANT_1 | BODY_ASSY | WIDTH | 22_INCH |
| LAWN_MOWR | XYZ_1 | MANUF_1 | PLANT_1 | WHEEL_ASY | WHEEL | SMALL |
| LAWN_MOWR | XYZ_1 | MANUF_1 | PLANT_1 | ENGINE_35 | SHAFT | MANUAL |
| LAWN_MOWR | XYZ_2 | MANUF_1 | PLANT_1 | LAWN_MOWR | ENGINE | 3.5_HP |
| LAWN_MOWR | XYZ_2 | MANUF_1 | PLANT_1 | BODY_ASSY | WIDTH | 22_INCH |
| LAWN_MOWR | XYZ_2 | MANUF_1 | PLANT_1 | WHEEL_ASY | WHEEL | LARGE |
| LAWN_MOWR | XYZ_2 | MANUF_1 | PLANT_1 | ENGINE_35 | SHAFT | SELF |
| LEGEND: PRODN. = PRODUCTION  CONFIG. = CONFIGURATION | | | | | | |

190

*Fig. 10*

| END ITEM CONFIGURATION STANDARD OPTIONS | | | | | ~ 200 |
|---|---|---|---|---|---|
| END ITEM ID. | CONFIG- URATION ID. 202 | CONFIG. VIEW ID. 204 | ITEM ID. | COMPONENT ITEM ID. | |
| LAWN_MOWR | XYZ_1 | ENGR. | LAWN_MOWR | CATCH_22 | |
| LAWN_MOWR | XYZ_2 | ENGR. | LAWN_MOWR | CATCH_22 | |
| LEGEND: CONFIG. = CONFIGURATION ENGR. = ENGINEERING VIEW | | | | | |

*Fig. 11*